# FASCICULE DE BREVET EUROPEEN

(11) **EP 2 388 533 B1**
(45) Date de publication et mention de la délivrance du brevet: **24.12.2014**
(21) Numéro de dépôt: 11166898.4
(22) Date de dépôt: 20.05.2011
(51) Int. Cl.: F24D 19/00, F24D 17/00, F24D 19/08

(54) **Installation de chauffe-eau améliorée**
Verbesserte Wasserboileranlage
Improved water heater equipment

(30) Priorité: 21.05.2010 FR 1053965
(43) Date de publication de la demande: 23.11.2011
(73) Titulaire: Electricité de France, 75008 Paris (FR)
(72) Inventeur: Radulescu, Mihai, 77250, Moret sur Loing (FR)
(74) Mandataire: Regimbeau

(56) Documents cités:
- EP-A2- 0 653 596
- FR-A1- 2 437 579
- US-A- 2 469 496
- US-A- 4 027 821

## Description

L'invention concerne de manière générale les chauffe-eau individuels munis d'une source thermique sous forme d'un moyen de production d'énergie thermique externe au ballon de réserve ou de stockage.

Plus particulièrement l'invention concerne les chauffe-eau solaires individuels munis d'un capteur héliothermique et d'un système auto-vidangeable.

De nombreuses recherches ont été menées dans le domaine des énergies renouvelables, notamment l'énergie solaire, encouragées pour des raisons écologiques. Ces recherches ont été notamment menées dans l'ensemble des dispositifs du parc résidentiel individuel et plus particulièrement dans le domaine des chauffe-eau individuels.

Ainsi, un chauffe-eau solaire individuel (CESI) comprend généralement un réservoir thermiquement isolé (appelé « ballon » ou « cumulus ») comprenant en son sein, une source de chauffage connectée à une source thermique externe. Cette source thermique externe est, dans le cadre de l'énergie solaire, un capteur héliothermique destiné à capter l'énergie solaire et transmettre une énergie thermique à un fluide caloporteur le traversant. Le fluide caloporteur permet de récupérer cette énergie thermique et de la transporter jusqu'à la source de chauffage au sein du ballon. Le fluide caloporteur est utilisé pour « chauffer » l'eau sanitaire au niveau du ballon à travers un échangeur tel qu'un serpentin, séparant ainsi le circuit d'eau sanitaire du circuit d'échange thermique, appelé « circuit solaire ». Le capteur héliothermique est généralement situé à une hauteur plus grande que ledit ballon; par exemple il peut être situé sur le toit d'un bâtiment.

Avantageusement, un chauffe-eau solaire individuel est accompagné d'un système auto-vidangeable (en termes anglo-saxons « drain-back ») permettant de vidanger le capteur héliothermique et les canalisations par gravité. Un tel système auto-vidangeable permet notamment de vidanger le capteur héliothermique et le système de canalisations et ainsi d'apporter une protection contre la surchauffe en cas de stagnation du fluide caloporteur en été et contre le gel en hiver. Cela permet d'éviter les dégradations dues au gel et les éventuelles pertes de fluide caloporteur dues à la vaporisation. Un système auto-vidangeable permet également d'utiliser l'eau dite « normale » comme fluide caloporteur au lieu d'une eau glycolée pour améliorer la performance thermique de l'installation. En effet, l'eau glycolée, bien que thermiquement moins performante et plus polluante que l'eau normale, présente l'avantage d'avoir une température de gel plus basse que celle de l'eau normale. Un système auto-vidangeable permet donc, en supprimant les problèmes liés au gel, de remplacer l'eau glycolée par une eau normale et ainsi d'éviter les risques de pollution en cas de fuite tout en résolvant les problèmes de gestion de produit polluant stocké dans une habitation. De plus, en utilisant de l'eau normale, on augmente le rendement thermique de l'installation.

Enfin un système auto-vidangeable permet une simplification du circuit de canalisations au sein d'un chauffe-eau solaire individuel : en effet, le circuit de canalisations ne requiert plus de vase d'expansion, de purgeur ou de système de remplissage. Ces composants sont généralement nécessaires dans le cas où les capteurs héliothermiques et le circuit de canalisations ne sont pas vidangeables afin d'éviter les éventuelles détériorations causées par une dilatation du fluide.

Sur le système de canalisations est installé un dispositif de pompage (connu en soi de l'état de la technique), destiné à provoquer la circulation du fluide au sein du circuit de canalisations.

Différentes variantes ont été déjà proposées pour assurer la vidange précitée.

On a illustré sur la figure 1 tirée du document US 4,326,499 une installation de chauffe-eau comprenant un ballon 13 dans lequel l'énergie thermique est échangée entre une eau sanitaire 17 et un fluide caloporteur 2 à travers un serpentin, ce dernier étant mis en circulation par une pompe 23 et traversant ainsi un capteur héliothermique 24 chauffant le fluide caloporteur 2. L'installation comprend en outre un tuyau 18b raccordé en dérivation d'un tuyau 18a de retour du fluide dans le ballon à partie de la sortie haute d'un capteur héliothermique 24 et rejoignant le tuyau 18a dans un collecteur 34a avant d'atteindre le ballon 13.

De la même manière, sur la figure 2, tirée du document WO 82/03677, est illustrée une installation de chauffe-eau comprenant un ballon de réserve d'eau chaude 12, dans lequel l'énergie thermique est échangée entre une eau sanitaire 16 et un fluide caloporteur 2 stocké dans un stockage annulaire 37 et chauffé par un capteur héliothermique 10. Cette installation comprend un tuyau de retour 20 du fluide caloporteur, le tuyau de retour se séparant en deux canalisations 27a et 27b, respectivement raccordées à une partie supérieure du stockage annulaire 37 en contact avec de l'air et à une partie médiane en contact avec le fluide caloporteur stocké.

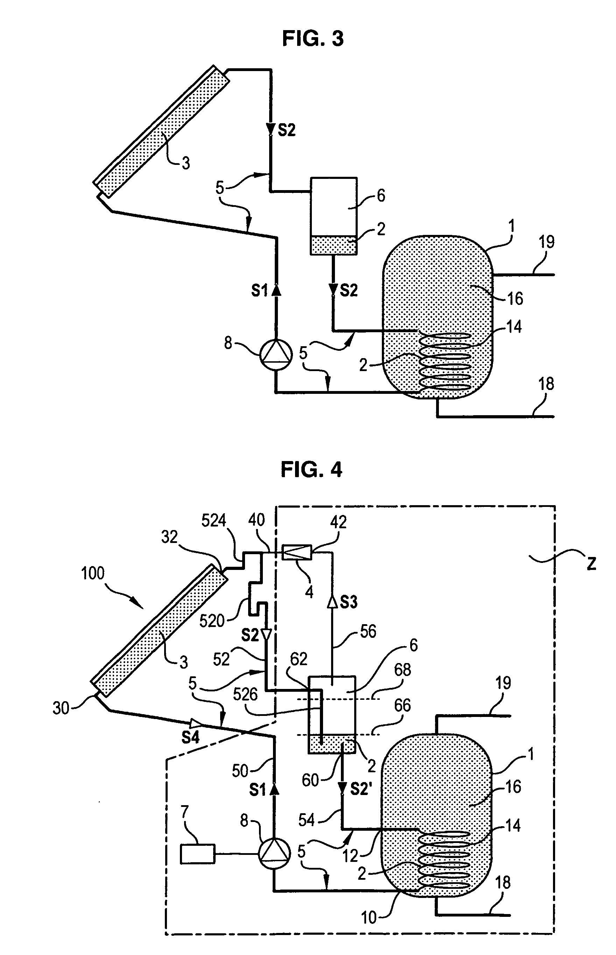

Enfin, sur la figure 3 est illustrée une installation de chauffe-eau comprenant un ballon de réserve d'eau chaude 1, dans lequel l'énergie thermique est échangée entre une eau sanitaire 16 et un fluide caloporteur 2 à travers un échangeur thermique sous forme d'un serpentin 14, le fluide 2 étant chauffé par un capteur héliothermique 3. Cette installation comprend un réservoir de vidange 6 agencé sur le circuit solaire (c'est-à-dire le circuit de circulation du fluide caloporteur 2) à l'extérieur du ballon, permettant d'accompagner l'expansion du fluide 2 et une pompe 8 agencée également sur le circuit solaire destinée à forcer la circulation du fluide 2 dans le circuit de canalisations 5 suivant le sens S₁ (d'une sortie de l'échangeur 14 vers une entrée du capteur 3 via une canalisation d'aller) et S₂ (d'une sortie du capteur 3 vers une entrée de l'échangeur 14 via une canalisation de retour).

Cependant, de nombreuses critiques ont été émises à l'encontre de tels systèmes auto-vidangeables qui ne donnent pas entière satisfaction. Notamment, les critiques émises concernent :
- une pente minimum (généralement 4%) qui doit être respectée sur l'ensemble du système de canalisations afin de garantir une vidange totale de la partie extérieure (soumise au risque de gel et de surchauffe) de l'installation lors de l'arrêt de la pompe,
- le fait que la pompe de circulation doit avoir une puissance élevée pour pouvoir remonter le fluide caloporteur jusqu'au point haut de l'installation où est agencé le capteur héliothermique, et
- des plaintes ont été émises à propos de bruits de fonctionnement lors de la vidange.

Afin de pallier à ces problématiques, une solution a été proposée par la demande de brevet FR 08 58 613. En référence à la figure 4 (tirée de ce document), ce dernier propose une installation de chauffe-eau comprenant un ballon de réserve d'eau chaude 1, une source comprenant un moyen de production d'énergie thermique 3 et un moyen de pompage 8 destiné à provoquer la circulation d'un fluide caloporteur 2 entre le moyen de production d'énergie thermique 3 et le ballon de réserve d'eau chaude 1.

Le fluide caloporteur circule alors d'une sortie 10 du ballon vers une entrée 30 du moyen de production d'énergie thermique 3 à travers une canalisation de départ 50 et d'une sortie 32 du moyen de production d'énergie 3 vers une entrée 62 d'un réservoir de vidange 6 à travers une canalisation de retour 52, et d'une sortie 60 du réservoir de vidange 6 vers une entrée du ballon 12. L'installation comprend un clapet anti-retour 4 raccordé sur la canalisation de retour 52 au voisinage d'un point haut 524 de l'installation. Le clapet anti-retour 4 est en outre connecté au réservoir de vidange 6 à l'aide d'une autre canalisation 56 destinée à la circulation d'air.

Ainsi, la présence d'un simple clapet anti-retour au voisinage d'un point haut de la canalisation, préférentiellement à la sortie du capteur héliothermique, permet de résoudre de manière simple et économique les problèmes évoqués. En effet, en cas d'arrêt de la pompe, l'abaissement de pression au niveau du point haut de la canalisation (dû au poids du fluide stagnant) permet d'ouvrir le clapet anti-retour et de créer ainsi un effet siphon permettant de vidanger l'ensemble des canalisations directement dans la retenue de fluide du réservoir de vidange.

Cependant des critiques on été émises à l'encontre de cette installation. En effet, cette installation a toujours besoin d'une différence de hauteur importante entre les capteurs solaires et le ballon de stockage afin de créer une différence de pression nécessaire à l'ouverture du clapet anti-retour.

Dans le cas où la hauteur entre le capteur et le réservoir de vidange est faible, ou si le capteur et le réservoir de vidange sont à la même hauteur ou encore si le capteur héliothermique est tel que la circulation de fluide en son sein induit de fortes pertes de charge, il a été remarqué que le clapet anti-retour ne s'ouvrait pas et que la vidange ne se réalisait pas même en cas d'ouverture forcée du clapet anti-retour 4.

Or il n'est pas toujours possible d'agencer le capteur à une plus grande hauteur que le réservoir de vidange. C'est notamment le cas pour des capteurs héliothermiques qui sont disposés au sol ou sur des murs (notamment pour les bâtiments dont la structure du toit ne permet pas d'accueillir de tels capteurs).

Le document US 4027821 divulgue une installation de chauffe-eau comprenant un ballon de réserve d'eau chaude multicompartiments, une source comprenant un moyen de production d'énergie thermique et un moyen de pompage destiné à provoquer la circulation d'un fluide caloporteur entre le moyen de production d'énergie thermique et le ballon de réserve d'eau chaude, le fluide caloporteur circulant d'une sortie du ballon vers une entrée du moyen de production d'énergie thermique à travers une canalisation de départ et d'une sortie du moyen de production d'énergie thermique vers une entrée de l'un des compartiments du ballon à travers une canalisation de retour, l'installation comprenant un clapet anti-retour raccordé en dérivation sur la canalisation de retour, le clapet anti-retour étant en outre connecté à un compartiment supérieur du ballon à l'aide d'une canalisation d'air pour la circulation d'air.

En conséquence, un but de l'invention est de proposer une installation de chauffe-eau avec un système autovidangeable amélioré permettant de garantir la vidange du circuit solaire même dans le cas d'une faible hauteur entre le capteur et le réservoir de vidange, ou dans le cas où le capteur héliothermique est tel que la circulation de fluide en son sein induit de fortes pertes de charge.

Un autre but de la présente invention est de proposer une installation chauffe-eau avec un système autovidangeable amélioré permettant de garantir la vidange du circuit solaire même dans le cas où le capteur héliothermique est situé à une hauteur plus basse que le réservoir de vidange.

A cet effet, l'invention propose une installation de chauffe-eau comprenant un ballon de réserve d'eau chaude, une source comprenant un moyen de production d'énergie thermique et un moyen de pompage destiné à provoquer la circulation d'un fluide caloporteur entre le moyen de production d'énergie thermique et le ballon de réserve d'eau chaude, le fluide caloporteur circulant d'une sortie du ballon vers une entrée du moyen de production d'énergie thermique à travers une canalisation de départ et d'une sortie du moyen de production d'énergie thermique vers une entrée d'un réservoir de vidange à travers une canalisation de retour, et d'une sortie du réservoir de vidange vers une entrée du ballon, un clapet anti-retour étant raccordé en dérivation sur la canalisation de retour, le clapet anti-retour étant en outre connecté au réservoir de vidange à l'aide d'une canalisation d'air pour la circulation d'air, l'installation étant caractérisée en ce que la canalisation comprend un moyen de génération d'une surpression au niveau du clapet anti-retour.

Ainsi, l'ajout d'un simple moyen de génération d'une surpression autorise une vidange du circuit solaire même en cas de faible hauteur entre le capteur et le réservoir de vidange.

Avantageusement mais facultativement, l'invention comprend la caractéristique suivante :
- la canalisation de retour comprend un moyen destiné à empêcher sur commande toute circulation de fluide en son sein d'une sortie du moyen de production d'énergie thermique vers une entrée d'un réservoir de vidange.

En effet, une telle installation autorise une vidange de circuit solaire même dans le cas où le capteur est situé à une hauteur plus faible que le réservoir de vidange.

Avantageusement mais facultativement, l'invention comprend au moins l'une des caractéristiques suivantes :
- le moyen destiné à empêcher sur commande toute circulation de fluide au sein de la canalisation de retour d'une sortie du moyen de production d'énergie thermique vers une entrée d'un réservoir de vidange est une vanne commandable,
- la canalisation de départ comprend une portion de canalisation située entre une sortie du ballon et une entrée du moyen de production d'énergie thermique et agencée à une hauteur plus grande qu'un niveau maximal du réservoir de vidange,
- l'entrée de la canalisation dans le réservoir de vidange est agencée à une hauteur plus grande qu'un niveau maximal du réservoir de vidange,
- le clapet anti-retour est connecté en dérivation sur la canalisation de retour à proximité de la sortie du moyen de production d'énergie thermique,
- le moyen de génération d'une surpression au niveau du clapet anti-retour est un compresseur ou un ventilateur,
- une ou plusieurs canalisations est(sont) comprise(s) dans un même tuyau,
- au moins l'un des éléments suivants est commandé par une unité de commande:
   ■ le moyen de génération d'une surpression,
   ■ le clapet anti-retour.
- le moyen destiné à empêcher sur commande toute circulation de fluide au sein de la canalisation de retour d'une sortie du moyen de production d'énergie thermique vers une entrée d'un réservoir de vidange est commandé par une unité de commande,
- la canalisation de retour d'une sortie du moyen de production d'énergie thermique vers une entrée d'un réservoir de vidange comprend une extension au sein du dispositif réservoir s'étendant en dessous d'un niveau bas du réservoir de vidange.

L'invention concerne également un procédé d'amélioration d'une installation de chauffe-eau, notamment dans le cadre d'une rénovation, l'installation comprenant un ballon de réserve d'eau chaude, un moyen de production d'énergie thermique et un moyen de pompage destiné à provoquer la circulation d'un fluide caloporteur entre le moyen de production d'énergie thermique et le ballon de réserve d'eau chaude, le fluide caloporteur circulant d'une sortie du ballon vers une entrée du moyen de production d'énergie thermique à travers une canalisation de départ et d'une sortie du moyen de production d'énergie thermique vers une entrée d'un réservoir de vidange à travers une canalisation de retour, et d'une sortie du réservoir de vidange vers une entrée du ballon, le procédé comprenant au moins les étapes suivantes :
- connecter un clapet anti-retour en dérivation sur la canalisation de retour à proximité de la sortie du moyen de production d'énergie thermique, et
- connecter le clapet anti-retour au réservoir de vidange à l'aide d'une canalisation,
   caractérisé en ce qu'il comprend en outre l'étape consistant à :
- agencer un moyen de génération d'une surpression au niveau du clapet anti-retour.

Avantageusement, mais facultativement l'invention comprend au moins l'une des caractéristiques suivantes :
- le procédé comprend en outre l'étape suivante :
   ■ agencer sur la canalisation de retour un moyen destiné à empêcher sur commande toute circulation de fluide en son sein d'une sortie du moyen de production d'énergie thermique vers une entrée du réservoir de vidange,
- Le procédé comprend en outre l'étape suivante :
   ■ agencer une canalisation dans le réservoir de vidange en prolongement de la canalisation de retour en dessous d'un niveau bas du réservoir de vidange.

D'autres caractéristiques, buts et avantages de la présente invention apparaîtront à la lecture de la description détaillée qui va suivre, au regard des figures annexées, données à titre d'exemples non limitatifs et sur lesquelles:

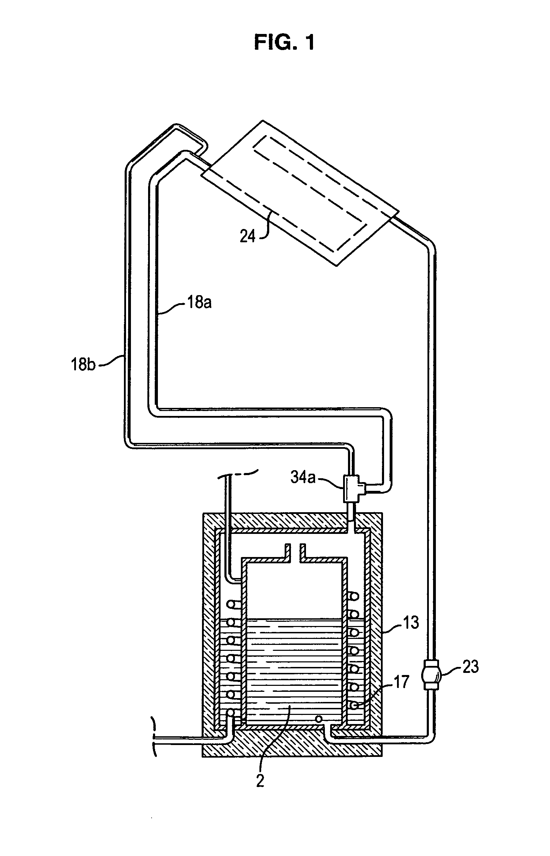

- la figure 1 est tirée du document US 4,326,499 et illustre une installation de chauffe-eau selon l'état de l'art,

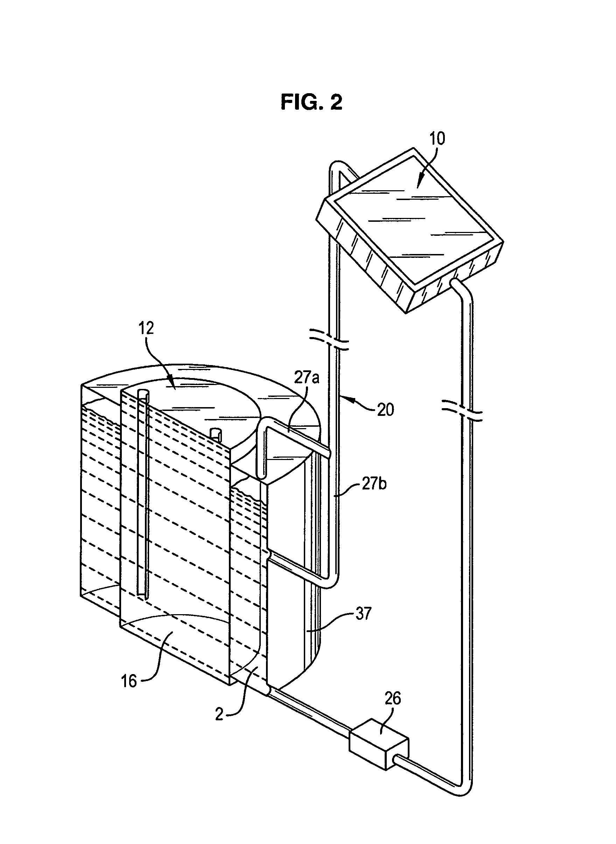

- la figure 2 est tirée du document WO 82/03677 et illustre une installation de chauffe-eau selon l'état de l'art,
- les figures 3 et 4 sont tirées du de la demande de brevet FR 08 58 613,
- la figure 5 est une représentation simplifiée d'une installation de chauffe-eau selon une réalisation possible de la présente invention,
- les figures 6a et 6b sont des représentations simplifiées d'une installation de chauffe-eau selon une autre réalisation possible de la présente invention,
- la figure 7 est une représentation simplifiée d'une coupe transversale d'un tuyau multiaxial pour une installation de chauffe-eau selon une réalisation possible de l'invention,
- la figure 8 est un diagramme simplifié d'un procédé d'amélioration d'une installation de chauffe-eau selon une réalisation possible de l'invention.

En référence à la figure 4 tirée du de la demande de brevet FR 08 58 613, une installation de chauffe-eau 100 comprend un ballon de réserve 1 d'eau chaude sanitaire 16, un capteur héliothermique 3 destiné à chauffer un fluide caloporteur 2 circulant au travers, et un moyen de pompage 8 destiné à provoquer la circulation du fluide caloporteur 2 à travers un circuit de canalisations 5, le fluide circulant entre le capteur héliothermique 3 et le ballon de réserve d'eau chaude 1. Plus précisément, le fluide caloporteur 2 circule d'une sortie 10 du ballon connectée à un échangeur thermique 14 (par exemple un serpentin) vers une entrée 30 du capteur héliothermique 3 à travers une canalisation de départ 50 dans un sens S1 et d'une sortie 32 du capteur héliothermique 3 vers une entrée 62 d'un réservoir de vidange 6 à travers une canalisation de retour 52 dans un sens S2, et d'une sortie 60 du réservoir de vidange 6 vers une entrée 12 connectée à l'échangeur 14 du ballon de réserve d'eau chaude 1 via une troisième canalisation 54 dans un sens S2'. Le réservoir de vidange 6 permet notamment de recevoir le fluide 2 contenu dans le capteur héliothermique 3 et les canalisations 50 et 52 pendant la phase d'autovidange (après l'arrêt du moyen de pompage 8) et d'accompagner la dilatation (due aux échanges thermiques) du fluide caloporteur 2 au sein de l'ensemble des canalisations de circulation du fluide. Le fluide caloporteur 2 circule au sein du ballon 1 à travers l'échangeur 14 tel qu'un serpentin au travers duquel un échange thermique est effectué entre l'eau sanitaire 16 et le fluide caloporteur 2. Le ballon 1 comprend en outre au moins une entrée 18 et une sortie 19 d'eau sanitaire connecté à un réseau d'eau sanitaire. Le ballon 1 et le réservoir de vidange 6 sont tout deux situés au sein d'une zone hors-gel Z qui n'est pas soumise à un risque de gel (température plus basse que la température de gel du fluide caloporteur), comme l'intérieur d'un bâtiment.

Un clapet anti-retour 4 se raccorde préférentiellement mais non limitativement en dérivation sur la canalisation de retour 52, au voisinage du point de sortie 32 du capteur héliothermique 3. Alternativement, le clapet anti-retour 4 est installé à un point haut 524 de la canalisation 52 (si ce dernier ne correspond pas à la sortie 32 du capteur héliothermique 3).

Le clapet anti-retour 4 est composé d'une entrée 42 et d'une sortie 40 tel que le clapet empêche toute circulation de fluide de la sortie 40 vers l'entrée 42. L'entrée 42 du clapet anti-retour 4 est connecté à un point haut 64 du réservoir de vidange via une canalisation 56, le point haut 64 étant au-dessus du niveau maximal de fluide 68 du réservoir de vidange 6. Ainsi, ce point haut 64 du réservoir de vidange 6 est situé de façon à ce qu'il ne soit jamais en contact avec le fluide du réservoir même quand ce dernier est dit « plein ».

Le capteur héliothermique 3 est préférentiellement mais non limitativement constitué d'un coffrage isolant comprenant un système de canalisation interne (par exemple un réseau de tubes en cuivre) servant d'échangeur. Le tout est couvert d'un vitrage ou d'un polycarbonate transparent afin d'obtenir une élévation de la température du fluide caloporteur 2 à partir du rayonnement solaire. Ainsi, le fluide caloporteur est circulé par la pompe 8 au niveau de l'entrée 30 du capteur héliothermique 3 et est chauffé à l'intérieur de ce capteur par effet de serre puis ressort par la sortie 32 en direction de l'entrée 62 du réservoir de vidange.

Lorsqu'il n'est plus possible de récupérer l'énergie thermique solaire quand le rayonnement solaire a diminué ou qu'un apport thermique n'est plus nécessaire, la pompe 8 est arrêtée (par exemple, il est prévu une unité de commande 7 destinée à la gestion du chauffe-eau et à la commande de la pompe 8). Une partie du circuit de canalisations 5 se vide alors par gravité. La canalisation supérieure 52 se vide alors dans le sens S₂ (de la sortie 32 du capteur 3 vers le réservoir de vidange 6) au sein du réservoir de vidange 6 et le capteur héliothermique 3 et une partie de la canalisation 50 se vident dans le sens S4 (de l'entrée 30 du capteur 3 vers l'échangeur 14 au sein du ballon) dans le réservoir de vidange 6 en traversant l'échangeur 14.

En l'absence du clapet anti-retour 4 et des canalisation 56 et 526 (référence à la figure 4), la vidange de la canalisation 52 provoque une circulation du fluide caloporteur perturbée par de l'air et dans le cas où la canalisation supérieure 52 comprend un coude 520 (se situant en dehors de la zone Z, c'est-à-dire qu'un risque de gel existe au niveau de ce coude 520), le retour de fluide au sein de la canalisation 52 en destination de la réserve de vidange 6 provoque une retenue de fluide au niveau du coude 520. Cette retenue de fluide comporte un double inconvénient. Premièrement, elle présente un risque de gel dans une période hivernale puisque ce coude se situe dans une partie située à l'extérieur de la zone hors-gel Z ; deuxièmement elle présente un risque de vaporisation en cas de stagnation du fluide en période estivale. De plus, même en l'absence de coude, des problèmes de nuisances sonores ont été soulevés lors de la vidange. En effet, la circulation alternée entre l'air et le fluide au sein de la canalisation 52 provoque une nuisance sonore amplifiée par le volume du réservoir de vidange 6.

Dans le cas où le capteur 3 est situé à une autre hauteur beaucoup plus haute que le réservoir de vidange 6 (référence à la figure 4), la simple présence du clapet anti-retour 4 connecté via la canalisation 56 à un point haut 64 du réservoir de vidange 6, permet de manière simple et économique d'éliminer les problèmes évoqués. En effet, en cas d'arrêt de la pompe 8, l'abaissement de pression au niveau du point haut de la canalisation et notamment au niveau de la sortie 32 du capteur héliothermique 3 permet d'ouvrir le clapet anti-retour 4 et de créer ainsi un effet siphon permettant de vidanger l'ensemble du capteur 3 et des canalisations 52 et 50 directement dans la retenue de fluide du réservoir de vidange 6. Cet effet siphon permet notamment d'éviter toute retenue de fluide dans le capteur héliothermique 3 et le coude 520 de la canalisation de retour 52. Il est à noter que le réservoir de vidange est préférentiellement agencé de sorte à ce que le coude 520 soit situé à une hauteur supérieure à un niveau maximal 68 au sein du réservoir de vidange 6 que le fluide 2 peut atteindre en cas de vidange complète et que l'entrée 62 du réservoir de vidange 6 est également située à une hauteur plus grande que le niveau maximal 68 pour prévenir tout retour de fluide dans le coude 520 après la vidange.

Plus précisément, lorsque la pompe 8 s'arrête, le fluide présent dans le circuit de canalisations 5 crée une dépression au niveau du point haut 524 qui ouvre le clapet anti-retour 4 qui provoque une circulation de l'air du réservoir de vidange 6 vers le clapet anti-retour 4 via la canalisation 56 permettant ainsi la régulation de pression. Une telle canalisation 56 reliant le clapet anti-retour 4 au réservoir de vidange 6 permet d'éviter tout contact entre le fluide 2 à l'intérieur du circuit solaire et l'air ambiant ce qui est un avantage dans le cas où le fluide utilisé est de l'eau glycolée, à cause du risque de pollution que présente ce type de fluide. Il est à noter qu'au vu de l'exploitation prévue de la canalisation 56, cette dernière peut être réalisée sous la forme d'un simple tuyau flexible de diamètre inférieur aux diamètres des canalisations 50 et 52, ce qui représente un avantage économique et une simplification du montage due à la flexibilité d'un tel tuyau. Le fluide 2 circule du point haut 524 vers le réservoir de vidange 6 dans le sens S₂. La circulation d'air du réservoir de vidange 6 vers le point haut 524 s'effectue via la canalisation 56 dans le sens S₃.

Une autre source de nuisance sonore est liée à la circulation du fluide qui chute de l'entrée du réservoir de vidange 6 jusque dans la retenue de fluide, source sonore amplifiée par le volume du réservoir de vidange 6. A cet effet, il est prévu que l'entrée 62 du réservoir de vidange 6 soit rallongée par une extension de canalisation (rallongement) 526 prolongeant la canalisation 52 au sein du réservoir de vidange 6 jusqu'à un niveau inférieur à un niveau 66 représentant le niveau bas minimal du réservoir de vidange 6. Ainsi, le fluide 2 s'écoule directement dans la retenue de fluide du réservoir de vidange 6 sans bruit lié à la chute du fluide.

Un clapet anti-retour étant un élément répandu sur le marché, son installation et sa maintenance présentent un avantage économique sans pour autant demander de modification importante ou complexe de l'installation. De plus, la combinaison d'un clapet anti-retour situé à un point haut de l'installation et d'une extension (rallongement) 526 de la canalisation 52 permet d'éviter toute nuisance sonore liée à la vidange et toute retenue de fluide dans le capteur et les coudes de la canalisation comme expliqué précédemment.

Cependant des critiques ont été émises à l'encontre de cette installation. En effet, cette installation a toujours besoin d'une différence de hauteur importante entre le capteur héliothermique 3 et le réservoir de vidange 6.

En effet, dans le cas où la hauteur entre le capteur et le réservoir de vidange est faible, ou si le capteur 3 et le réservoir de vidange 6 sont quasiment à la même hauteur ou encore si le capteur héliothermique est tel que la circulation de fluide en son sein induit de fortes pertes de charge, il a été remarqué que le clapet anti-retour ne s'ouvrait pas et que la vidange ne se réalisait pas même en cas d'ouverture forcée du clapet anti-retour 4.

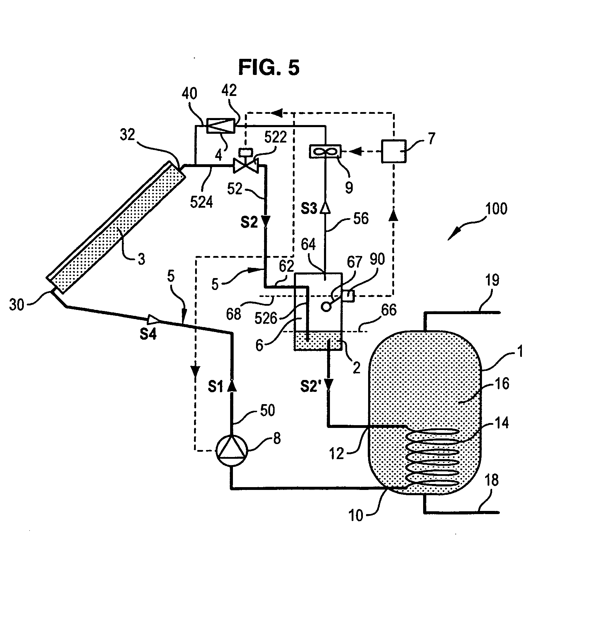

En référence à la figure 5 et selon une réalisation possible de la présente invention, l'installation comprend en outre un moyen de génération d'une surpression 9 au niveau du clapet anti-retour 4. Plus précisément, ce moyen de génération d'une surpression 9 permet de créer une surpression au niveau de l'entrée 42 du clapet anti-retour 4 permettant non seulement l'ouverture du clapet-retour 4 même lorsque la hauteur entre le capteur 3 et le réservoir de vidange 6 est insuffisante pour créer une surpression nécessaire à son ouverture mais également de « pousser » le fluide contenu dans le capteur 3 et dans les éléments de canalisation 50 et 52 jusque dans le réservoir de vidange 6 dans les sens S₂ (de la sortie 32 du capteur 3 vers le réservoir de vidange 6) et S4 (de l'entrée 30 du capteur 3 vers l'échangeur 14 au sein du ballon). La circulation d'air, quant à elle, s'effectue du réservoir de vidange 6 vers le clapet anti-retour 4 via la canalisation 56 dans le sens S₃ (du point haut 64 du réservoir de vidange 6 vers l'entrée 42 du clapet anti-retour 4).

Le moyen de génération d'une surpression 9 permettant de créer une surpression est préférentiellement un compresseur. Mais il peut être de tout type connu de l'état de la technique permettant de créer une surpression au niveau de l'entrée 42 du clapet anti-retour 4 comme un ventilateur.

Toutefois il a été noté que, parfois lors de la vidange de fluide aidée par le compresseur 9, la canalisation de retour 52 se vidait entièrement avant la vidange du reste du circuit de canalisations 5. En effet, une fois la canalisation de retour 52 vidée de tout fluide caloporteur, un « court-circuit » est provoqué dans la circulation d'air entre les canalisations 52 et 56, supprimant tout effet du compresseur 9 sur le reste du circuit de canalisations 5 et notamment sur la vidange du capteur 3.

Pour éviter ce « court-circuit », il est prévu selon une réalisation possible de la présente invention l'agencement sur la canalisation de retour 52 d'un moyen 522 destiné à empêcher sur commande toute circulation de fluide en son sein d'une sortie 32 du moyen de production d'énergie thermique 3 vers une entrée 62 d'un réservoir de vidange 6, préférentiellement sous la forme d'une vanne pilotable 522. Ainsi, lors d'une vidange, la vanne pilotable 522 est fermée (c'est-à-dire qu'elle empêche alors toute circulation du fluide caloporteur à travers elle) évitant de provoquer le « court-circuit » précité. Préférentiellement, la vanne 522 est fermée avant le démarrage du compresseur 9. Une fois le capteur 3 vidangé, la vanne 522 est réouverte, autorisant la circulation de fluide caloporteur à travers la canalisation 52 pour terminer la vidange. Une fois la vidange terminée, le compresseur 9 est arrêté.

Le compresseur 9 est préférentiellement commandé par l'unité de commande 7 qui commande également le moyen de pompage 8. Bien évidemment, il peut être également prévu que le moyen 9 soit commandé par une autre unité de commande 7. De la même manière, il est prévu que l'unité de commande 7 commande également la vanne pilotable 522.

Il est prévu que l'unité de commande 7 du compresseur 9 soit connectée à un capteur 90 fonctionnant en coopération avec un flotteur 67 permettant d'indiquer si le fluide 2 a atteint son niveau maximal 68. Le flotteur 67, le capteur 90 et leur coopération peuvent être de tout type connu de l'état de la technique (mécanique, électronique, optique, optoélectronique, ...). Notamment, la valeur du niveau de fluide 2 au sein du réservoir de vidange 6 peut être mesurée à l'aide d'un seul capteur sans aide de flotteur (comme un capteur capacitif).

Préférentiellement, l'unité de commande 7 agit de la manière suivante :
- lorsqu'il n'est plus possible de récupérer l'énergie thermique solaire quand le rayonnement solaire a diminué par exemple (information accessible à l'aide par exemple de deux capteurs de température agencés au niveau du capteur héliothermique 3 et du ballon 1), la pompe 8 est arrêtée par l'unité de commande 7,
- une fois la pompe 8 arrêtée, la vanne 522 est fermée par l'unité de commande 7,
- ensuite, le clapet anti-retour 4 est ouvert pour la circulation de l'air de la canalisation 56 vers le capteur 3,
- puis, le compresseur 9 est démarré pour la vidange du circuit de canalisations 5,
- une fois la vidange du capteur 3 terminée (information accessible à l'aide par exemple d'un capteur de niveau 90 au sein du réservoir de vidange 6), la vanne 522 est ouverte afin de vidanger également la canalisation de retour 52,
- une fois la vidange du circuit terminée (information accessible à l'aide du capteur 90 indiquant que le niveau maximal 68 est atteint), le compresseur 9 est arrêté.
Bien évidemment, cet ordre chronologique est donné à titre illustratif et ne constitue pas une limite de la présente invention.

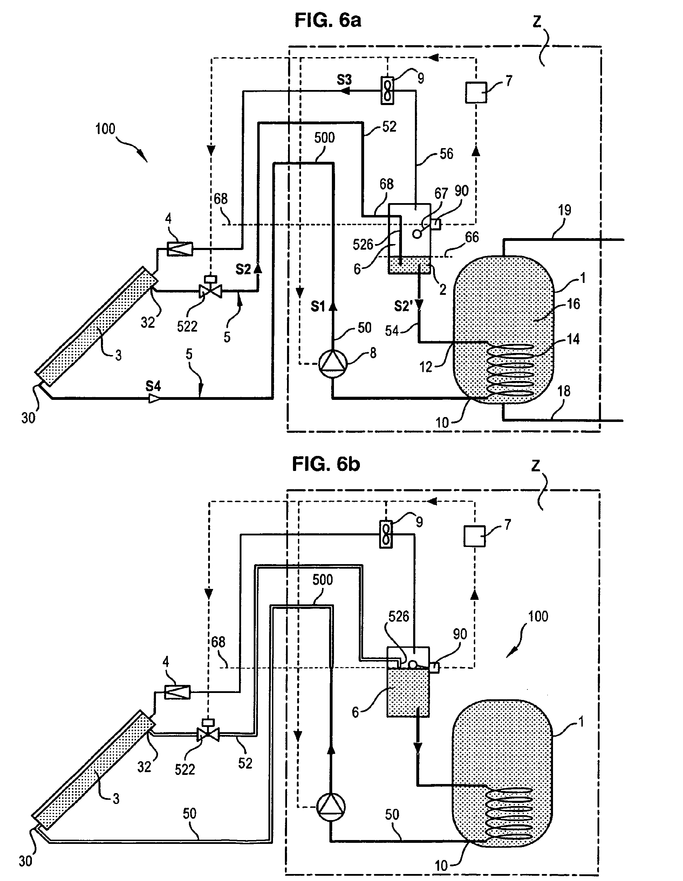

En référence aux figures 6a et 6b, et selon une réalisation possible de la présente invention, il est prévu que la canalisation de départ 50 comprend une portion de canalisation 500 située entre une sortie 10 du ballon 1 vers une entrée 30 du moyen de production d'énergie thermique 3 et agencée à une hauteur plus grande qu'un niveau maximal 68 du réservoir de vidange 6. Plus concrètement, cela peut prendre la forme d'une trajectoire de la canalisation de départ 50 comprenant un coude agencé à une hauteur plus haute que le niveau maximal 68 du réservoir de vidange 6. Préférentiellement, le coude 500 est situé au moins partiellement au sein d'une zone hors-gel Z qui n'est pas soumise à un risque de gel comme l'intérieur d'un bâtiment. Le risque de gel intervient lorsque la température ambiante devient plus basse que la température de gel du fluide caloporteur, généralement 7°C (celui ne signifie pas toutefois que le gel intervienne à cette température mais qu'au dessus de cette dernière, il est généralement considéré qu'il n'y a pas de risque de gel).

Ainsi, en référence à la figure 6a, lorsque la pompe 8 est en fonctionnement, le fluide caloporteur circule librement le long du circuit de canalisations 5 et le coude 500 est « franchi » par le fluide caloporteur à l'aide de l'énergie de circulation transmise par la pompe 8 au fluide caloporteur 2.

En référence à la figure 6b, lorsque la pompe est arrêtée et la vidange effectuée comme expliqué précédemment, le capteur 3, la canalisation de retour 52 et la partie de la canalisation de départ 50 située entre le coude 500 et l'entrée 30 du capteur 3 sont vidangés, c'est-à-dire vides de tout fluide caloporteur. Alors, tout retour de fluide au sein de la canalisation de départ 50 en direction du capteur 3 par effet hydrostatique est interdit du fait de ce coude 500 situé à une hauteur plus importante que le niveau maximal 68 du réservoir de vidange.

En conséquence, la présence de ce coude 500 évite tout retour du fluide caloporteur au-delà du coude 500 (c'est-à-dire en dehors de la zone hors-gel Z où le risque de gel est présent) une fois la vidange effectuée. Ainsi, tout risque de détérioration par gel du fluide caloporteur est évité. Cette réalisation de la présente invention rend possible la vidange du capteur 3 quand celui-ci est placé à une hauteur moins importante que le niveau minimal 66 du réservoir de vidange 6.

Tant que le niveau de fluide n'a pas atteint le niveau de fluide maximal 68 du réservoir de vidange, le compresseur 9 est maintenu en fonctionnement. Dés l'atteinte de ce niveau, le moyen 9 est arrêté. Bien évidemment tout autre type d'asservissement du moyen 9 peut être envisagé notamment en fonction de la valeur du niveau mesuré (par exemple une commande PID).

Le clapet anti-retour 4 peut être situé sur n'importe quelle portion de la canalisation 56 entre le compresseur 9 et le capteur héliothermique 3.

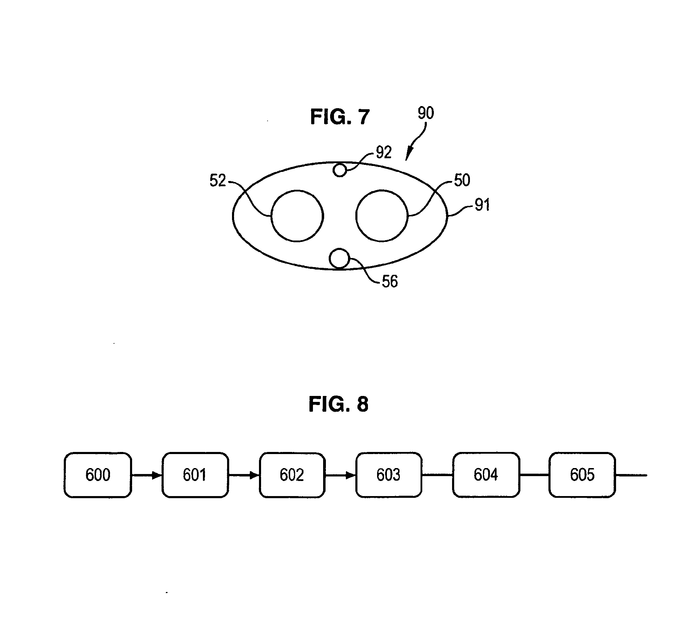

En référence à la figure 7 et selon une réalisation possible de la présente invention, l'ensemble des canalisations connectées entre le capteur héliothermique 3 et le ballon 1 ou le réservoir de vidange 6, (canalisation d'entrée 50 et de sortie 52, la canalisation de retour d'air 56 et un ou plusieurs câbles électriques 92 de commande et de gestion, par exemple utilisés par l'unité de commande 7 notamment pour la commande de la pompe 8 et/ou du compresseur 9, de la vanne 522 et pour la réception d'information du capteur 90) sont tous agencés au sein d'un même tuyau 90 entouré d'une gaine 91 et, réalisé en matière électriquement isolante, ce tuyau est appelé en termes anglo-saxon « twin tube » et « multiaxial » en termes français. Un tel tuyau multiaxial, permet de simplifier et/ou de normaliser le raccordement de l'ensemble des canalisations et des tuyaux constituant le chauffe-eau selon l'invention.

Avantageusement, le clapet anti-retour 4 peut être remplacé par une électrovanne contrôlée par l'unité de commande 7 en même temps que le moyen 9 de génération d'une surpression. L'unité de commande 7 est alors munie de capteurs connus de l'état de l'art par exemple permettant d'informer sur une température au sein du ballon de réserve 1 ou sur l'exposition solaire du capteur héliothermique 3.

Selon une réalisation possible de la présente invention, le compresseur 9 et le clapet anti-retour 4 sont un seul même élément réunissant les deux fonctions. Par exemple, il est possible que les deux éléments soient compris au sein d'un même boitier commun.

En référence à la figure 8, il est prévu selon l'invention un procédé d'amélioration d'une installation de chauffe-eau par exemple dans le cadre d'une rénovation, le chauffe-eau comprenant au moins un ballon et/ou un réservoir de vidange connecté en série avec un moyen de production d'énergie thermique via un réseau de canalisations ; le procédé comprenant les étapes suivantes :
- fournir un chauffe-eau à améliorer (étape 600),
- agencer un clapet anti-retour, préférentiellement au niveau d'une sortie du moyen de production d'énergie thermique (étape 601),
- connecter le clapet anti-retour au ballon ou au réservoir de vidange à l'aide d'une canalisation (étape 602),
- agencer un moyen de génération d'une surpression au niveau du clapet anti-retour (étape 603).
- agencer une canalisation 526 dans le réservoir de vidange 6 (ou ballon 1) en extension de l'entrée 62 (ou 12) de la canalisation 52 (étape 604).
- agencer sur la canalisation de retour 52 un moyen 522 apte à empêcher (sur commande) toute circulation de fluide en son sein d'une sortie 32 du moyen de production d'énergie thermique 3 vers une entrée 62 d'un réservoir de vidange 6 (étape 605).

## Revendications

1. Installation de chauffe-eau comprenant un ballon de réserve d'eau chaude (1), une source comprenant un moyen de production d'énergie thermique (3) et un moyen de pompage (8) destiné à provoquer la circulation d'un fluide caloporteur (2) entre le moyen de production d'énergie thermique (3) et le ballon de réserve d'eau chaude (1), le fluide caloporteur (2) circulant d'une sortie (10) du ballon vers une entrée (30) du moyen de production d'énergie thermique (3) à travers une canalisation de départ (50) et d'une sortie du moyen de production d'énergie thermique (32) vers une entrée (62) d'un réservoir de vidange (6) à travers une canalisation de retour (52), et d'une sortie (60) du réservoir de vidange (6) vers une entrée du ballon (12), un clapet anti-retour (4) étant raccordé en dérivation sur la canalisation de retour (52), le clapet anti-retour (4) étant en outre connecté au réservoir de vidange (6) à l'aide d'une canalisation d'air (56) pour la circulation d'air, l'installation étant **caractérisée en ce que** la canalisation (56) comprend un moyen de génération d'une surpression (9) au niveau du clapet anti-retour (4).

2. Installation de chauffe-eau selon la revendication 1, dans laquelle la canalisation de retour (52) comprend un moyen (522) destiné à empêcher sur commande toute circulation de fluide en son sein d'une sortie (32) du moyen de production d'énergie thermique (3) vers une entrée (62) d'un réservoir de vidange (6).

3. Installation de chauffe-eau selon la revendication 2, dans laquelle le moyen (522) destiné à empêcher sur commande toute circulation de fluide au sein de la canalisation de retour (52) d'une sortie (32) du moyen de production d'énergie thermique (3) vers une entrée (62) d'un réservoir de vidange (6) est une vanne commandable (522).

4. Installation de chauffe-eau selon la revendication 2 ou 3, dans laquelle la canalisation de départ (50) comprend une portion de canalisation (500) située entre une sortie (10) du ballon et une entrée (30) du moyen de production d'énergie thermique (3) et agencée à une hauteur plus grande qu'un niveau maximal (68) du réservoir de vidange (6).

5. Installation de chauffe-eau selon la revendication 4, dans laquelle l'entrée (62) de la canalisation (52) dans le réservoir de vidange (6) est agencée à une hauteur plus grande qu'un niveau maximal (68) du réservoir de vidange (6).

6. Installation de chauffe-eau selon l'une des revendications 1 à 5, dans laquelle le clapet anti-retour (4) est connecté en dérivation sur la canalisation de retour (52) à proximité de la sortie (32) du moyen de production d'énergie thermique (3).

7. Installation de chauffe-eau selon l'une des revendications 1 à 6, **caractérisée en ce que** le moyen de génération d'une surpression (9) au niveau du clapet anti-retour (4) est un compresseur ou un ventilateur.

8. Installation de chauffe-eau selon l'une des revendications 1 à 7, dans laquelle une ou plusieurs canalisations (52, 54, 56) est(sont) comprise(s) dans un même tuyau (90).

9. Installation de chauffe-eau selon l'une des revendications 1 à 8, dans laquelle au moins l'un des éléments suivants est commandé par une unité de commande (7) :
- le moyen de génération d'une surpression (9),
- le clapet anti-retour (4).

10. Installation de chauffe-eau selon l'une des revendications 1 à 9 en combinaison avec la revendication 2, dans laquelle le moyen (522) destiné à empêcher sur commande toute circulation de fluide au sein de la canalisation de retour (52) d'une sortie (32) du moyen de production d'énergie thermique (3) vers une entrée (62) d'un réservoir de vidange (6) est commandé par une unité de commande (7).

11. Installation de chauffe-eau selon l'une des revendications 1 à 10, dans laquelle la canalisation de retour (52) d'une sortie du moyen de production d'énergie thermique (3) vers une entrée d'un le réservoir de vidange (6) comprend une extension (526) au sein du dispositif réservoir s'étendant en dessous d'un niveau bas (66) du réservoir de vidange (6).

12. Procédé d'amélioration d'une installation de chauffe-eau, notamment dans le cadre d'une rénovation, l'installation comprenant un ballon de réserve d'eau chaude (1), un moyen de production d'énergie thermique (3) et un moyen de pompage (8) destiné à provoquer la circulation d'un fluide caloporteur (2) entre le moyen de production d'énergie thermique (3) et le ballon de réserve d'eau chaude (1), le fluide caloporteur (2) circulant d'une sortie (10) du ballon vers une entrée (30) du moyen de production d'énergie thermique (3) à travers une canalisation de départ (50) et d'une sortie du moyen de production d'énergie thermique (32) vers une entrée (62) d'un réservoir de vidange (6) à travers une canalisation de retour (52), et d'une sortie (60) du réservoir de vidange (6) vers une entrée du ballon (12), le procédé comprenant au moins les étapes suivantes :
- connecter un clapet anti-retour (4) en dérivation sur la canalisation de retour (52) à proximité de la sortie (32) du moyen de production d'énergie thermique (3), et
- connecter le clapet anti-retour (4) au réservoir de vidange (6) à l'aide d'une canalisation (56),
**caracterisé en ce qu'**il comprend en outre l'étape consistant à:
- agencer un moyen de génération d'une surpression (9) au niveau du clapet anti-retour (4).

13. Procédé d'amélioration d'une installation de chauffe-eau selon la revendication 12, lequel comprend en outre l'étape suivante :
- agencer sur la canalisation de retour (52) un moyen (522) destiné à empêcher sur commande toute circulation de fluide en son sein d'une sortie (32) du moyen de production d'énergie thermique (3) vers une entrée (62) du réservoir de vidange (6).

14. Procédé d'amélioration d'une installation de chauffe-eau selon la revendication 12 ou 13, **caractérisé en ce qu'**il comprend en outre l'étape suivante :
- agencer une canalisation (526) dans le réservoir de vidange (6) en prolongement de la canalisation (52) de retour en dessous d'un niveau bas (66) du réservoir de vidange (6).

## Patentansprüche

1. Wasserboileranlage, umfassend einen Warmwasserspeicher (1), eine Quelle mit einem Mittel zur Erzeugung von Wärmeenergie (3) und ein Pumpmittel (8), das dazu dient, das Fließen eines Wärmetransportmediums (2) zwischen dem Mittel zur Erzeugung von Wärmeenergie (3) und dem Warmwasserspeicher (1) zu bewirken, wobei das Wärmetransportmedium (2) von einem Auslauf (10) des Speichers zu einem Einlauf (30) des Mittels zur Erzeugung von Wärmeenergie (3) durch eine Vorlaufleitung (50) und von einem Auslauf des Mittels zur Erzeugung von Wärmeenergie (32) zu einem Einlauf (62) eines Entleerungsbehälters (6) durch eine Rücklaufleitung (52) und von einem Auslauf (60) des Entleerungsbehälters (6) zu einem Einlauf des Speichers (12) fließt, wobei ein Rückschlagventil (4) über eine Zweigleitung an die Rücklaufleitung (52) angeschlossen ist, wobei das Rückschlagventil (4) darüber hinaus mit dem Entleerungsbehälter (6) mithilfe einer Luftleitung (56) für die Luftzirkulation verbunden ist, wobei die Anlage **dadurch gekennzeichnet ist, dass** die Leitung (56) ein Mittel zum Generieren eines Überdrucks (9) auf Ebene des Rückschlagventils (4) umfasst.

2. Wasserboileranlage nach Anspruch 1, bei der die Rücklaufleitung (52) ein Mittel (522) umfasst, das dazu dient, auf Befehl jedes Fließen von Medium in ihr von einem Auslauf (32) des Mittels zur Erzeugung von Wärmeenergie (3) zu einem Einlauf (62) eines Entleerungsbehälters (6) zu verhindern.

3. Wasserboileranlage nach Anspruch 2, bei der das Mittel (522), das dazu dient, auf Befehl jedes Fließen von Medium in der Rücklaufleitung (52) von einem Auslauf (32) des Mittels zur Erzeugung von Wärmeenergie (3) zu einem Einlauf (62) eines Entleerungsbehälters (6) zu verhindern, ein steuerbares Ventil (522) ist.

4. Wasserboileranlage nach Anspruch 2 oder 3, bei der die Vorlaufleitung (50) einen Leitungsabschnitt (500) umfasst, der sich zwischen einem Auslauf (10) des Speichers und einem Einlauf (30) des Mittels zur Erzeugung von Wärmeenergie (3) befindet und auf einer Höhe angeordnet ist, die über einem maximalen Füllstand (68) des Entleerungsbehälters (6) liegt.

5. Wasserboileranlage nach Anspruch 4, bei welcher der Einlauf (62) der Leitung (52) in den Entleerungsbehälter (6) auf einer Höhe angeordnet ist, die über einem maximalen Füllstand (68) des Entleerungsbehälters (6) liegt.

6. Wasserboileranlage nach einem der Ansprüche 1 bis 5, bei der das Rückschlagventil (4) über eine Zweigleitung mit der Rücklaufleitung (52) in der Nähe des Auslaufs (32) des Mittels zur Erzeugung von Wärmeenergie (3) verbunden ist.

7. Wasserboileranlage nach einem der Ansprüche 1 bis 6, **dadurch gekennzeichnet, dass** das Mittel zum Generieren eines Überdrucks (9) auf Ebene des Rückschlagventils (4) ein Kompressor oder ein Verdichter ist.

8. Wasserboileranlage nach einem der Ansprüche 1 bis 7, bei der eine oder mehrere Leitungen (52, 54, 56) in ein und demselben Rohr (90) enthalten ist(sind).

9. Wasserboileranlage nach einem der Ansprüche 1 bis 8, bei der mindestens eines der folgenden Teile von einer Steuerungseinheit (7) gesteuert wird:
- das Mittel zum Generieren eines Überdrucks (9),
- das Rückschlagventil (4).

10. Wasserboileranlage nach einem der Ansprüche 1 bis 9 in Kombination mit Anspruch 2, bei der das Mittel (522), das dazu dient, auf Befehl jedes Fließen des Mediums in der Rücklaufleitung (52) von einem Auslauf (32) des Mittels zur Erzeugung von Wärmeenergie (3) zu einem Einlauf (62) eines Entleerungsbehälters (6) zu verhindern, von einer Steuerungseinheit (7) gesteuert wird.

11. Wasserboileranlage nach einem der Ansprüche 1 bis 10, bei der die Rücklaufleitung (52) von einem Auslauf des Mittels zur Erzeugung von Wärmeenergie (3) zu einem Einlauf eines Entleerungsbehälters (6) eine Erweiterung (526) innerhalb der Behältervorrichtung umfasst, die sich unterhalt eines unteren Füllstands (66) des Entleerungsbehälters (6) erstreckt.

12. Verfahren zur Verbesserung einer Wasserboileranlage, insbesondere im Rahmen einer Erneuerung, wobei die Anlage einen Warmwasserspeicher (1), ein Mittel zur Erzeugung von Wärmeenergie (3) und ein Pumpmittel (8) umfasst, das dazu dient, das Fließen eines Wärmetransportmediums (2) zwischen dem Mittel zur Erzeugung von Wärmeenergie (3) und dem Warmwasserspeicher (1) zu bewirken, wobei das Wärmetransportmedium (2) von einem Auslauf (10) des Speichers zu einem Einlauf (30) des Mittels zur Erzeugung von Wärmeenergie (3) durch eine Vorlaufleitung (50) und von einem Auslauf des Mittels zur Erzeugung von Wärmeenergie (32) zu einem Einlauf (62) eines Entleerungsbehälters (6) durch eine Rücklaufleitung (52) und von einem Auslauf (60) des Entleerungsbehälters (6) zu einem Einlauf des Speichers (12) fließt, wobei das Verfahren mindestens die folgenden Schritte umfasst:
- Verbinden eines Rückschlagventils (4) über eine Zweigleitung mit der Rücklaufleitung (52) in der Nähe des Auslaufs (32) des Mittels zur Erzeugung von Wärmeenergie (3) und
- Verbinden des Rückschlagventils (4) mit dem Entleerungsbehälter mithilfe einer Leitung (56),
**dadurch gekennzeichnet, dass** es darüber hinaus den Schritt umfasst, der darin besteht:
- ein Mittel zum Generieren eines Überdrucks (9) auf Ebene des Rückschlagventils (4) anzuordnen.

13. Verfahren zur Verbesserung einer Wasserboileranlage nach Anspruch 12, das darüber hinaus den folgenden Schritt umfasst:
- Anordnen eines Mittels (522) an der Rücklaufleitung (52), das dazu dient, auf Befehl jedes Fließen von Medium in ihr von einem Auslauf (32) des Mittels zur Erzeugung von Wärmeenergie (3) zu einem Einlauf (62) des Entleerungsbehälters (6) zu verhindern.

14. Verfahren zur Verbesserung einer Wasserboileranlage nach Anspruch 12 oder 13, **dadurch gekennzeichnet, dass** es darüber hinaus den folgenden Schritt umfasst:
- Anordnen einer Leitung (526) im Entleerungsbehälter (6) zur Verlängerung der Rücklaufleitung (52) unterhalb eines unteren Füllstands (66) des Entleerungsbehälters (6).

## Claims

1. Water heater equipment comprising a hot water reservoir (1), a source comprising a heat energy producing unit (3) and a pumping unit (8) intended to provoke the circulation of a heat transfer fluid (2) between the heat energy producing unit (3) and the hot water reservoir (1), with the heat transfer fluid (2) circulating from an outlet (10) of the reservoir to an inlet (30) of the heat energy producing unit (3) through a departing channel (50) and from an outlet of the heat energy producing unit (32) to an inlet (62) of a drain tank (6) through a return channel (52), and from an outlet (60) of the drain tank (6) to an inlet of the reservoir (12), with a check valve (4) being connected as a bypass on the return channel (52), the check valve (4) being furthermore connected to the drain tank (6) using an air channel (56) for the circulation of air, with the equipment **characterised in that** the channel (56) comprises an overpressure generating unit (9) at the level of the check valve (4).

2. Water heater equipment according to claim 1, wherein the return channel (52) comprises a unit (522) intended to prevent by control any circulation of fluid within it from an outlet (32) of the heat energy producing unit (3) to an inlet (62) of a drain tank (6).

3. Water heater equipment according to claim 2, wherein the unit (522) intended to prevent by control any circulation of fluid within the return channel (52) from an output (32) of the heat energy producing unit (3) to an inlet (62) of a drain tank (6) is a controllable valve (522).

4. Water heater equipment according to claim 2 or 3, wherein the departing channel (50) comprises a channel portion (500) located between an outlet (10) of the reservoir and an inlet (30) of the heat energy producing unit (3) and arranged at a height greater than a maximum level (68) of the drain tank (6).

5. Water heater equipment according to claim 4, wherein the inlet (62) of the channel (52) in the drain tank (6) is arranged at a height greater than a maximum level (68) of the drain tank (6).

6. Water heater equipment according to one of claims 1 to 5, wherein the check valve (4) is connected as a bypass on the return channel (52) in the vicinity of the outlet (32) of the heat energy producing unit (3).

7. Water heater equipment according to one of claims 1 to 6, **characterised in that** the overpressure generating unit (9) at the level of the check valve (4) is a compressor or a valve.

8. Water heater equipment according to one of claims 1 to 7, wherein one or several channels (52, 54, 56) are comprised in the same pipe (90).

9. Water heater equipment according to one of claims 1 to 8, wherein at least one of the following elements is controlled by a control unit (7):
- the overpressure generating unit (9).
- the check valve (4).

10. Water heater equipment according to one of claims 1 to 9 in combination with claim 2, wherein the unit (522) intended to prevent by control any circulation of fluid within the return channel (52) from an outlet (32) of the heat energy producing unit (3) to an inlet (62) of a drain tank (6) is controlled by a control unit (7).

11. Water heater equipment according to one of claims 1 to 10, wherein the return channel (52) from an outlet of the heat energy producing unit (3) to an inlet (62) of a drain tank (6) comprises an extension (526) within the tank device extending under a low level (66) of the drain tank (6).

12. Method for improving a water heater equipment, in particular in the framework of a renovation, with the equipment comprising a hot water reservoir (1), a heat energy producing unit (3) and a pumping unit (8) intended to provoke the circulation of a heat transfer fluid (2) between the heat energy producing unit (3) and the hot water reservoir (1), with the heat transfer fluid (2) circulating from an outlet (10) of the reservoir to an inlet (30) of the heat energy producing unit (3) through a departing channel (50) and from an outlet of the heat energy producing unit (32) to an inlet (62) of a drain tank (6) through a return channel (52), and from an outlet (60) of the drain tank (6) to an inlet of the reservoir (12), with the method comprising at least the following steps :
- connecting a check valve (4) as a bypass on the return channel (52) in the vicinity of the outlet (32) of the heat energy producing unit (3), and
- connecting the check valve (4) to the drain tank (6) using a channel (56),
**characterised in that** it further comprises the step consisting in:
- arranging an overpressure generating unit (9) at the level of the check valve (4).

13. Method for improving a water heater equipment according to claim 12, which further comprises the following step:
- arranging on the return channel (52) a unit (522) intended to prevent by control any circulation of fluid within it from an outlet (32) of the heat energy producing unit (3) to an inlet (62) of the drain tank (6).

14. Method for improving a water heater equipment according to claim 12 or 13, **characterised in that** it further comprises the following step:
- arranging a channel (526) in the drain tank (6) as an extension of the return channel (52) under a low level (66) of the drain tank (6).
